# EUROPEAN PATENT APPLICATION

(11) **EP 1 867 870 A1**
(43) Date of publication of application: **19.12.2007**
(21) Application number: 07018030.2
(22) Date of filing: 17.01.2005
(51) Int. Cl.: F02P 5/15, F02D 41/02

(54) **Ignition control method and apparatus for a carburetor engine**

(62) Divisional of application: 05250210.1
(71) Applicant: Kwang Yang Motor Co., Ltd., Kaohsiung (TW)
(72) Inventor: Hsieh, Shih-Chia, Tsoying District Kaohsiung (TW); Tsai, Meng-Lung, Sanmin District Kaohsiung (TW)
(74) Representative: Newell, William Joseph

(57) **Abstract**

An ignition control, apparatus (5) for a carburetor engine (4) includes a controller (52) that can obtain a digital value proportional to an engine temperature. When the digital value is smaller than a threshold value, the controller (52) actuates the ignition of a spark plug (42) at a delayed ignition angle. Otherwise, the controller (52) actuates the ignition of the spark plug (43) at a non-delayed ignition angle.

## Description

The invention relates to an ignition control method and apparatus, more particularly to an ignition control method and apparatus for a carburetor engine.

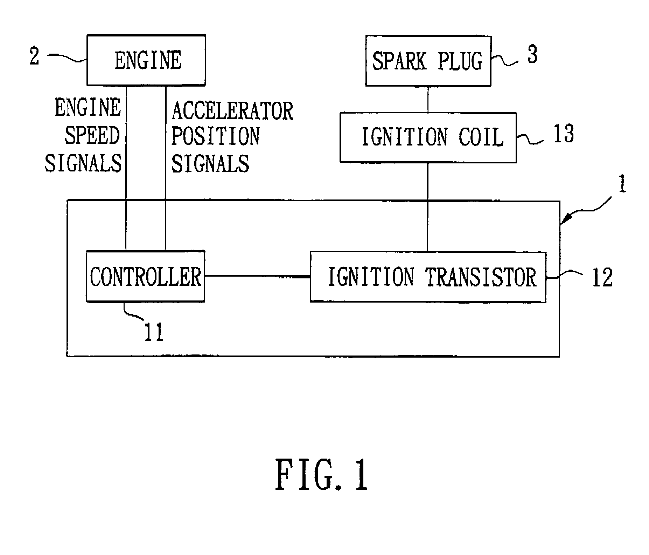

Referring to Figure 1, a conventional ignition control apparatus 1 for a carburetor engine 2, after the engine 2 is started, continuously receives engine speed signals and accelerator position signals, and accordingly determines through a controller 11 an optimal ignition angle for a spark plug 3. Hence, an ignition coil 13 is excited by an ignition transistor 12 to raise voltage for actuating the ignition of the spark plug 3 at the optimal ignition angle.

According to field research, CO (carbon monoxide) and NOx (Nitrogen Oxides) are primary end products that result from combustion of the engine 2 and that pollute the air. To solve the pollution issue so as to meet stringent emissions standards, besides improvement over the combustion system of the engine 2, a lot of efforts have been put on post-processing methods by many machine manufacturers. The most common post-processing method involves placing catalysts in an exhaust pipe to reduce CO and NOx in the exhaust through interaction of the catalysts and the exhaust. However, when the engine 2 is started, the temperature thereof increases to result in a corresponding increase in the NOx in the exhaust. If the catalyst activation temperature has yet to be reached, large quantities of NOx are contained in the exhaust discharged from the engine 2.

Since many countries now have stringent emissions standards for exhaust, many machine and vehicle manufacturers have invested a lot in search of alternative solutions other than lowering catalyst activation temperatures in order to develop products that meet present emissions standards under current manufacturing conditions. This invention is developed from the aforesaid viewpoint for finding a solution that permits increase of the exhaust temperature while decreasing the quantity of NOx in the exhaust on the basis of interrelationship among the engine 2, the ignition control apparatus 1 and the spark plug 3.

Therefore, the main object of the present invention is to provide ignition control methods and apparatus for a carburetor engine that can overcome the aforesaid drawback associated with the prior art.

According to one aspect of the present invention, there is provided an ignition control method for a carburetor engine. The ignition control method includes the steps of:
a) timing by a timer when the engine is powered on;
b) collecting an engine speed signal and an accelerator position signal from the engine and a time signal from the timer by a controller connected to the engine;
c) performing an integration on the engine speed signal and the time signal to obtain an integration value; and
d) comparing the integration value with a threshold value, and actuating the ignition of a spark plug in a cylinder of the engine at a delayed ignition angle when the integration value is smaller than the threshold value, and at a non-delayed ignition angle when otherwise.

According to another aspect of the present invention, there is provided an ignition control method for a carburetor engine. The ignition control method includes the steps of:
a) collecting an engine temperature signal from a temperature sensor by an analog-to-digital converter;
b) converting the engine temperature signal into a digital value in the analog-to-digital converter;
c) providing the digital value to a controller connected to the engine; and
d) comparing the digital value with a threshold value, and actuating the ignition of a spark plug in a cylinder of the engine at a delayed ignition angle when the digital value is smaller than the threshold value, and at a non-delayed ignition angle when otherwise.

According to still another aspect of the present invention, there is provided an ignition control method for a carburetor engine. The ignition control method includes the steps of:
a) collecting an engine temperature signal from a heat-sensitive resistor by an analog-to-digital converter;
b) converting the engine temperature signal into a digital value in the analog-to-digital converter;
c) providing the digital value to a controller connected to the engine; and
d) comparing the digital value with a threshold value, and actuating the ignition of a spark plug in a cylinder of the engine at a delayed ignition angle when the digital value is smaller than the threshold value, and at a non-delayed ignition angle when otherwise.

According to a yet another aspect of the present invention, there is provided an ignition control apparatus for a carburetor engine that includes a cylinder having a spark plug. The ignition control apparatus includes a timer and a controller.

The timer times when the engine is powered on.

The controller collects an engine speed signal and an accelerator position signal from the engine and a time signal from the timer when the engine is powered on, performs an integration on the engine speed signal and the time signal to obtain an integration value, compares the integration value with a threshold value, and actuates the ignition of the spark plug at a delayed ignition angle when the integration value is smaller than the threshold value, and at a non-delayed ignition angle when otherwise.

According to yet another aspect of the present invention, there is provided an ignition control apparatus for a carburetor engine that includes a cylinder having a spark plug. The ignition control apparatus includes a temperature sensor, an analog-to-digital converter, and a controller.

The temperature sensor senses the temperature of the engine, and produces an engine temperature signal.

The analog-to-digital converter is connected to the temperature sensor for converting the engine temperature signal of the temperature sensor into a digital value.

The controller is connected to the engine and the analog-to-digital converter, compares the digital value with a threshold value, and actuates the ignition of the spark plug at a delayed ignition angle when the digital value is smaller than the threshold value, and at a non-delayed ignition angle when otherwise.

According to a further aspect of the present invention, there is provided an ignition control apparatus for a carburetor engine that includes a cylinder having a spark plug. The ignition control apparatus includes a heat-sensitive resistor, an analog-to-digital converter, and a controller.

The heat-sensitive resistor measures the temperature of the engine, and produces an engine temperature signal.

The analog-to-digital converter is connected to the heat-sensitive resistor and converts the engine temperature signal of the heat-sensitive resistor into a digital value.

The controller is connected to the engine and the analog-to-digital converter, compares the digital value with a threshold value, and actuates the ignition of the spark plug at a delayed ignition angle when the digital value is smaller than the threshold value, and at a non-delayed ignition angle when otherwise.

Other features and advantages of the present invention will become apparent in the following detailed description of the preferred embodiments with reference to the accompanying drawings, of which:
Figure 1 is a block diagram of a conventional ignition control apparatus for a carburetor engine;
Figure 2 is a schematic view of an engine, illustrating relation between the ignition of a spark plug and the position of a piston;
Figure 3 is a block diagram of the first preferred embodiment of an ignition control apparatus for a carburetor engine according to the present invention;
Figure 4 is a 3-dimensional graph illustrating relationship among engine speed, accelerator position and delayed ignition angle;
Figure 5 is a 3-dimensional graph illustrating relationship among engine speed, accelerator position and non-delayed ignition angle;
Figure 6 is a block diagram of the second preferred embodiment of an ignition control apparatus for a carburetor engine according to the present invention; and
Figure 7 is a block diagram of the third preferred embodiment of an ignition control apparatus for a carburetor engine according to the present invention.

Before the present invention is described in greater detail with reference to the accompanying preferred embodiments, it should be noted herein that like elements are denoted by the same reference numerals throughout the disclosure.

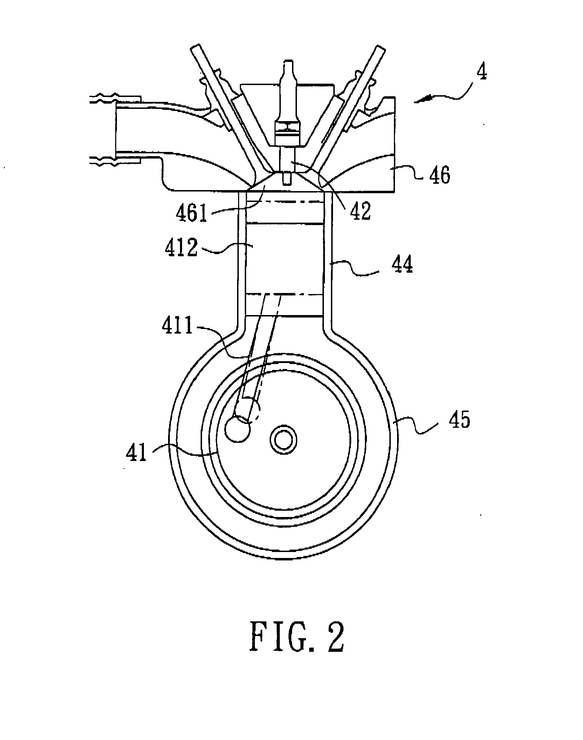

Referring to Figure 2, which is a schematic view of an engine 4, a crankshaft 41 drives a piston 412 via a connecting rod 411. If a spark plug 42 ignites when the crankshaft 41 moves the piston 412 to the position shown by the solid lines, the ignition angle of the spark plug 42 is defined as a non-delayed ignition angle. On the other hand, if the spark plug 42 ignites when the crankshaft 41 moves the piston 412 to the position shown by the phantom lines, the ignition angle of the spark plug 42 is defined as a delayed ignition angle. From the viewpoint of activation time of ignition, ignition time of the delayed ignition angle is later than that of the non-delayed ignition angle.

When the spark plug 42 ignites at the delayed ignition angle, since the ignition time point is delayed, the residence time for the exhaust generated by combustion inside the engine 4 is shortened. In other words, contact time between fuel gas and the engine 4 is shorter, which causes the temperature of the exhaust discharged from the engine 4 to contact a catalyst to become higher. As a result, even when the engine 4 is not sufficiently warm, the catalyst has already absorbed enough heat to enter an activating state earlier for reacting with the exhaust to proceed with conversion, and thereby lowering the quantity of CO, CH and NOx that are generated so as to reduce the impact of air pollution.

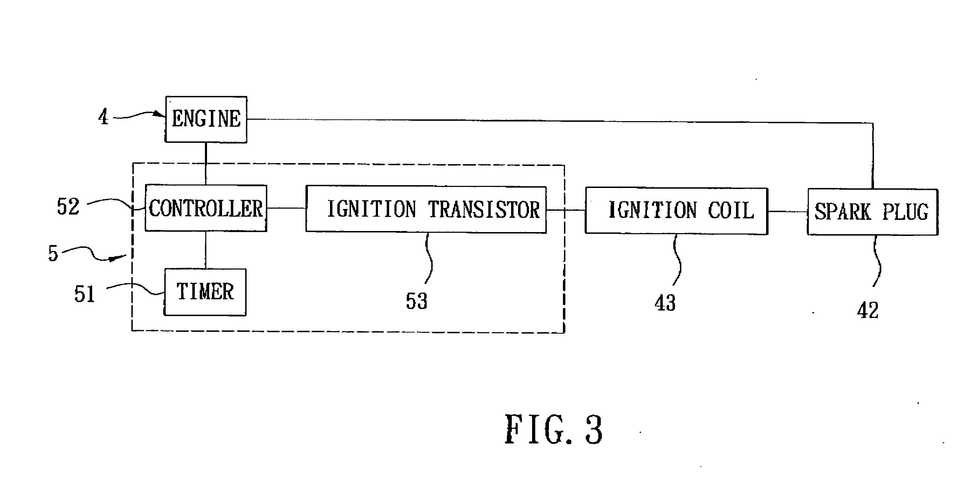

Referring to Figure 3, the first preferred embodiment of an ignition control apparatus 5 for a carburetor engine 4 according to the present invention is shown to be adapted for controlling ignition angle of a spark plug 42 in the engine 4 and to include a timer 51 and a controller 52. The timer 51 times when the engine 4 is powered on. The controller 52 is connected to the spark plug 42 through an ignition transistor 53 and an ignition coil 43. The ignition coil 43 is operated in a manner that when the controller 52 determines the ignition time point of the spark plug 42, the voltage of the ignition coil 43 is increased to apredeterminedvalue under the control of the controller 52 so as to discharge an electric current to ignite the spark plug 42.

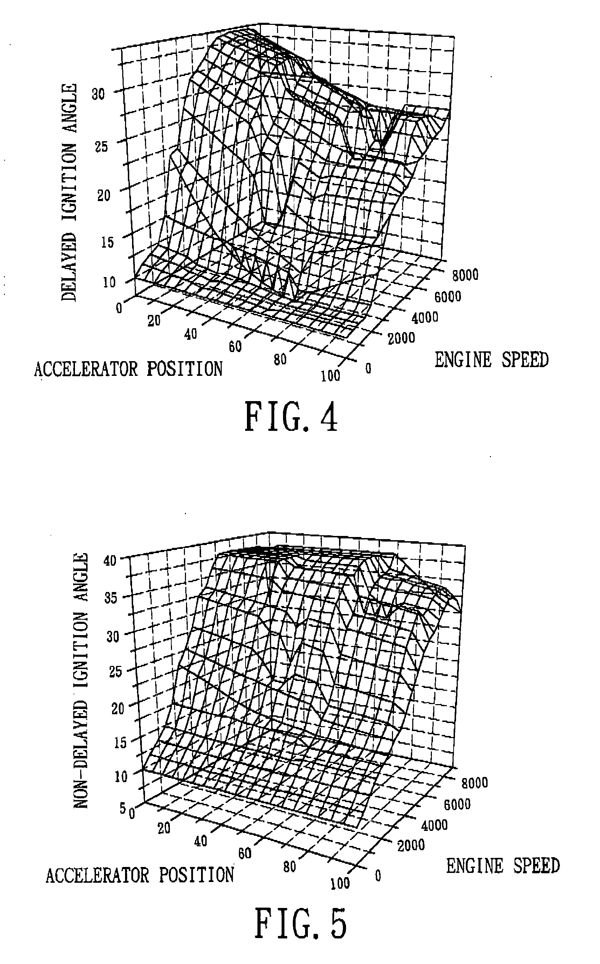

A detailed process flow of the first embodiment in practice includes the following steps:
a) The controller 52 collects an engine speed signal and an accelerator position signal from the engine 4 and a time signal from the timer 51 when the engine 4 is powered on. At this moment the spark plug 42 is controlled by the controller 52. When the time signal from the timer 41 has yet to reach a predetermined value (which is proportional to engine temperature), ignition is triggered at a delayed ignition angle according to a 3-dimensional graph (MP1) that illustrates relationship among engine speed, accelerator position and delayed ignition angle as shown in Figure 4.
b) The controller 52 performs an integration on the engine speed signal and the time signal to obtain an integration value, compares the integration value with a threshold value, and actuates the ignition of the spark plug 42 at a delayed ignition angle when the integration value is smaller than the threshold value, and at a non-delayed ignition angle according to a 3-dimensional graph (MP2) that illustrates relationship among engine speed, accelerator position and non-delayed ignition angle as shown in Figure 5 when otherwise.

In this embodiment, selection of the ignition angle through the graph (MP1) or (MP2) by the controller 52 is based on collected engine speed values, accelerator position values and integration values of engine speed vs. time. First, the controller 52 determines the temperature of the engine in accordance with the integration value of engine speed vs. time. The relation between the integration values and the engine temperature is decided by the manufacturer. Whether the integration value has reached the threshold value or not, the controller 52 determines an ignition angle from the engine speed value and the accelerator position value with reference to the 3-dimensional graphs (MP1) and (MP2) of engine speed vs. accelerator position vs. ignition angle.

When the integration value is smaller than the threshold value, the controller 52 ignites the spark plug 42 at a delayed ignition angle in accordance with the 3-dimensional graph (MP1) of engine speed vs. accelerator position vs. delayed ignition angle (as shown in Figure 4). As such, the exhaust discharged from the engine 4 has a relatively high temperature. In this manner, when the exhaust comes into contact with the catalyst, the catalyst temperature is quickly increased so as to reach the catalyst activation temperature.

On the other hand, when the integration value is greater than the threshold value (indicating that the engine temperature is already sufficient high), the controller 52 immediately responds to trigger the ignition of the spark plug 42 at a non-delayed ignition angle in accordance with the 3-dimensional graph (MP2) of engine speed vs. accelerator position vs. non-delayed ignition angle (as shown in Figure 5).

With the integration of input signals of speed of the engine 4, accelerator position and time through the controller 52, delayed ignition angles of the 3-dimensional graph (MP1) of relation among engine speed, accelerator position and ignition angle (as shown in Figure 4), or non-delayed ignition angles of the 3-dimensional graph (MP2) of relation among engine speed, accelerator position and non-delayed ignition angle (as shown in Figure 5) are determined so as to keep the temperature of the exhaust above a predetermined temperature. As an end result, catalyst activation temperature can be quickly reached for lowering down the emission quantity of NOx, CH, and CO.

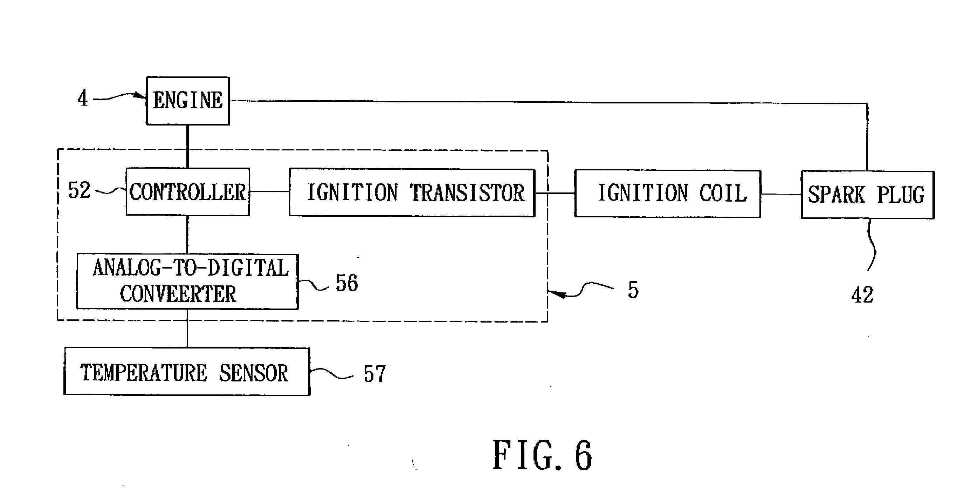

Referring to Figures 2 and 6, the second preferred embodiment of an ignition control apparatus 5 for a carburetor engine 4 according to the present invention is similar to the first preferred embodiment in construction except that, a temperature sensor 57 is used to replace the timer 51, and the ignition control apparatus 5 further comprises an analog-to-digital converter 56 interconnecting the temperature sensor 57 and the controller 52. The temperature sensor 57 can be mounted on a cylinder head 46 of the engine 4, a cylinder body 44 of the engine 4, a crankcase 45 of the engine 4, an exhaust pipe of the engine 4, or a radiator for measuring temperature.

A detailed process flow of the second embodiment in practice includes the following steps:
a) collecting an engine temperature signal from the temperature sensor 57 by the analog-to-digital converter 56;
b) converting the engine temperature signal into a digital value in the analog-to-digital converter 56;
c) providing the digital value to the controller 52; and
d) comparing the digital value with a threshold value, and actuating the ignition of the spark plug 42 at a delayed ignition angle according to the 3-dimensional graph (MP1) when the digital value is smaller than the threshold value, and at a non-delayed ignition angle according to the 3-demensional graph (MP2) when otherwise.

In this embodiment, the temperature sensor 57 is used to replace the timer 51. As such, the controller 52 no longer performs an integration on the engine speed signal and the time signal, and instead directly senses variation of the engine temperature through the temperature sensor 57, and obtains a digital value for processing through the analog-to-digital converter 56 as a basis for determining the ignition angle of the spark plug 42.

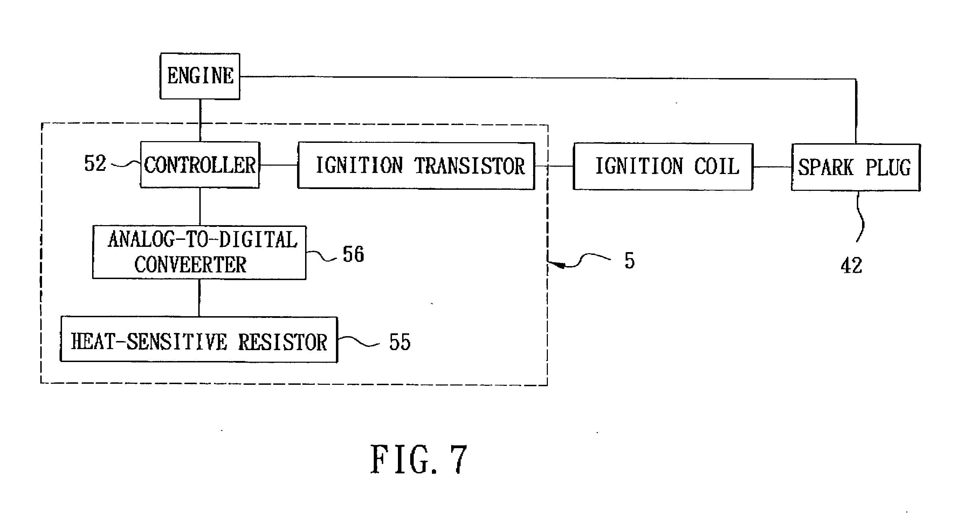

Referring to Figure 7, the third preferred embodiment of an ignition control apparatus 5 for a carburetor engine 4 according to the present invention is similar to the second preferred embodiment in construction except that, a heat-sensitive resistor 55 is used to replace the temperature sensor 57. The heat-sensitive resistor 55 is electrically connected to the controller 52 through the analog-to-digital converter 56 which converts an engine temperature signal from the heat-sensitive resistor 55 to a form acceptable by the controller 52.

A detailed process flow of the third embodiment in practice includes the following steps:
a) collecting an engine temperature signal from the heat-sensitive resistor 55 by the analog-to-digital converter 56;
b) converting the engine temperature signal into a digital value in the analog-to-digital converter 56;
c) providing the digital value to the controller 52; and
d) comparing the digital value with a threshold value, and actuating the ignition of the spark plug 42 in a cylinder of the engine 4 at a delayed ignition angle when the digital value is smaller than the threshold value, and at a non-delayed ignition angle when otherwise.

In this embodiment, the heat-sensitive resistor 55 directly senses variation of the engine temperature for comparison with a threshold value as a basis for determining of the ignition angle of the spark plug 42.

It should be noted that the aforesaid three embodiments are operable independently. Therefore, combined implementation of two or three of the aforesaid three embodiments for selection of the ignition angle is feasible, and even advisable for the extra effects of fail-safety and fault tolerance.

In sum, the ignition control apparatus 5 according the present invention is operable to determine ignition angles through signals received by the controller 52. Upon starting the engine 4, ignition can proceed through delayed ignition angles so that the exhaust can quickly carry heat energy away from the combustion chamber 461 of the engine 4 into the exhaust pipe of the engine 4 for contact with the catalyst therein in order to increase the catalyst temperature and reduce the quantity of pollutants in the generated exhaust gas.

## Claims

1. An ignition control method for a carburetor engine (4), **characterized in that** the ignition control method includes the steps of:
a) collecting an engine temperature signal from a heat-sensitive resistor (55) by an analog-to-digital converter (56) ;
b) converting the engine temperature signal into a digital value in the analog-to-digital converter (56).;

2. An ignition control apparatus (5) for a carburetor engine (4), the engine (4) including a cylinder having a spark plug (42), **characterized in that** the ignition control apparatus (5) includes:
a heat-sensitive resistor (55) for measuring the temperature of the engine (4) and for producing an engine temperature signal;
an analog-to-digital converter (56) connected to the heat-sensitive resistor (55) for converting the engine temperature signal of the heat-sensitive resistor (55) into a digital value; and
a controller (52) connected to the engine (4) and the analog-to-digital converter (56) for comparing the digital value with a threshold value, and for actuating the ignition of the spark plug (42) at a delayed ignition angle when the digital value is smaller than the threshold value, and at a non-delayed ignition angle when otherwise.
